# EUROPÄISCHE PATENTSCHRIFT

(11) **EP 1 434 703 B1**
(45) Veröffentlichungstag und Bekanntmachung des Hinweises auf die Patenterteilung: **15.02.2006**
(21) Anmeldenummer: 02772204.0
(22) Anmeldetag: 24.08.2002
(51) Int. Cl.: B60N 2/06, B60N 2/427

(54) **FAHRZEUGSITZ UND VERFAHREN ZUR ANSTEUERUNG DESSELBEN**
VEHICLE SEAT AND METHOD FOR CONTROLLING THE SAME
SIEGE DE VEHICULE ET SON PROCEDE D'ACTIVATION

(30) Priorität: 13.10.2001 DE 10150719
(43) Veröffentlichungstag der Anmeldung: 07.07.2004
(73) Patentinhaber: DaimlerChrysler AG, 70567 Stuttgart (DE)
(72) Erfinder: DÄUBER, Markus, 73079 Süssen (DE); GÖTZ, Christian, 73207 Plochingen (DE); MAYER, Christian, 71254 Ditzingen (DE)
(86) Internationale Anmeldenummer: PCT/EP2002/009492
(87) Internationale Veröffentlichungsnummer: WO 2003/033294

(56) Entgegenhaltungen:
- WO-A-01/45979
- DE-A- 3 023 035
- DE-C- 19 652 050
- GB-A- 2 334 006
- US-A- 5 328 234
- US-A- 5 716 094
- PATENT ABSTRACTS OF JAPAN vol. 018, no. 101 (C-1168), 18. Februar 1994 (1994-02-18) & JP 05 300821 A (NISSAN MOTOR CO LTD), 16. November 1993 (1993-11-16)

## Beschreibung

Die Erfindung betrifft einen Fahrzeugsitz gemäß dem Oberbegriff des Anspruchs 1 und ein Verfahren zur Steuerung des Fahrzeugsitzes gemäß dem Oberbegriff des Anspruchs 5.

Aus der gattungsbildenden DE 3023035 A1 ist ein Fahrzeugsitz bekannt, welcher dazu geeignet ist die Insassenbelastung bei einem Seitenaufprall erheblich zu reduzieren. Der Sitz umfasst eine Sitzhalterung, welche bei einem Seitenaufprall eine Querbewegung des Sitzes relativ zur Sitzaufnahme im Fahrzeug zulässt. Die Querbewegung kann mittels eines Querverschiebeantriebs erfolgen, so dass bei einer Intrusion eines Kollisionsobjekts in das Fahrzeug ein Fahrzeuginsasse durch die Querbewegung des ganzen Sitzes in Wirkungsrichtung des Aufpralls eine Relativbewegung weg vom Intrusionsort und zur Fahrzeugmitte hin erfährt. Die Querbewegung des Sitzes kann so gesteuert werden, dass die Verschiebung des Sitzes eingeleitet wird, bevor die Kräfte einwirken, welche sich aus der Intrusion ergeben, wobei die Verschiebekräfte und der Verschiebezeitpunkt an eine optimale Schutzwirkung angepasst werden.

Aufgabe der Erfindung ist es, einen Fahrzeugsitz und ein Verfahren zur Steuerung des Fahrzeugsitzes anzugeben, mit denen ein Insassen durch seine Querverschiebung bei einem Seitenaufprall möglichst weitgehend geschützt werden kann. Diese Aufgabe wird hinsichtlich des Fahrzeugsitzes gelöst durch die Merkmale des Anspruchs 1 und hinsichtlich des Verfahrens gelöst durch die Merkmale des Anspruchs 5.

Der Erfindung liegt ein Fahrzeugsitz in einem Kraftfahrzeug zugrunde, welcher bei einem Seitenaufprall eine Relativbewegung des darauf sitzenden Insassen von der aufprallzugewandten Fahrzeugseite weg, zur Fahrzeugmitte hin bewirkt. Alternativ hierzu kann die seitliche Verlagerung des Fahrzeuginsassen auch schon vor dem Kollisionszeitpunkt eingeleitet werden. Erfindungsgemäß ist zur Verlagerung eines Insassen nicht der Fahrzeugsitz als Ganzes, sondern eine einzelne Sitzkomponente, insbesondere ein Sitzpolster unabhängig vom übrigen Fahrzeugsitz quer zur Fahrzeuglängsachse verschiebbar. Es ist selbstverständlich, dass auch mehrere Sitzpolster einzeln seitlich verschiebbar sein können. Vorteil der Erfindung ist es, dass die zu beschleunigende Masse reduziert ist, was ein kleineres Verschiebeaggregat ermöglicht, welches schneller beschleunigt und abgebremst werden kann. Der für die Verschiebung vorzuhaltende Bauraum ist vermindert, da andere Sitzkomponenten wie beispielsweise das Sitzgestell nicht verschoben werden. Weiterer Vorteil ist, dass ein größerer Verschiebeweg für einen Insassen ermöglicht wird, als dies bei einer Verschiebung des ganzen Sitzes der Fall ist. Ein zusätzlicher Vorteil eines erfindungsgemäßen Fahrzeugsitzes ist es, dass Teile des Fahrzeugsitzes, welche nicht verschoben werden, beispielsweise ein Sitzgestell oder eine Sitzlängsverschiebemechanik zusätzliche Verformungsenergie aufnehmen können.

Die verschiebbaren Sitzpolster sind solche Teile des Fahrzeugsitzes, welche Reib- oder Formschluss mit dem Insassen haben, so dass über deren Verschiebung eine Querverlagerung des Insassen erfolgt. Solche Sitzpolster können in unterschiedlichen Ausgestaltungen des Fahrzeugsitzes beispielsweise eine Sitzfläche, eine Sitzlehne, eine Kopfstütze, ein Sitzseitenpolster oder eine Armlehne sein. Ein Sitz mit der Möglichkeit zu einem unabhängigen Verschieben von zwei oder mehr Sitzpolstern, welche gleichzeitig oder zeitversetzt verschoben werden können, ermöglicht es, die erreichbare Schutzwirkung für einen Insassen weiter zu erhöhen. Die Querverlagerung eines Insassen, d.h. die Verlagerung der gewünschten Körperteile/Körperbereiche des Insassen in Richtung Fahrzeugmitte erfolgt durch eine Kraftübertragung auf den Insassen durch die Sitzpolster.

In einer Weiterbildung des Fahrzeugsitzes ist eine Arretiervorrichtung für ein verschiebbares Sitzpolster vorgesehen, welche das querverschobene Sitzpolster, im Anschluss an eine erfolgte Querverschiebung in deren Endposition festlegt. Die Arretiervorrichtung kann eine mechanische Vorrichtung sein, welche selbsttätig, nachdem die Sitzpolster eine vorgebbare Endposition erreicht hat, wirksam wird. Alternativ hierzu kann eine ansteuerbare Arretiervorrichtung vorgesehen sein, welche die Sitzpolster in einer Endposition festlegt. Bei der ansteuerbaren Arretiervorrichtung können mehrere unterschiedliche Endpositionen von einem Steuergerät vorgebbar sein, wobei die Endpositionen in Abhängigkeit von Insassenparametern und/oder Unfallparametern vorgegeben werden können. Vorteil dieser Weiterbildung ist es, dass der Fahrzeugsitz nach der Querverschiebung einer Sitzpolster eine festgelegte Position hat, so dass weitere Schutzmaßnahmen für den Insassen gezielt eingeleitet werden können. In einer einfachen Ausgestaltung kann die Arretierung eines querverschobenen Sitzpolsters am Ende des Verschiebewegs durch eine konstruktiv vorgebbare Erhöhung der Reibung am Ende einer Laufschiene erfolgen.

Erfolgt eine Vorausbestimmung von Unfallparametern wie Unfallzeitpunkt und Intrusionsort mit ausreichender Genauigkeit, so kann die Querverschiebung eines Insassen mittels eines erfindungsgemäßen Fahrzeugsitzes hinsichtlich des Zeitablaufs und hinsichtlich der Verschiebewege, insbesondere bei mehreren unabhängig voneinander verschiebbaren Sitzpolstern, an einen Unfall, und bei entsprechender Insassenerkennung auch an einen Insassen angepasst werden.

Nachstehend wird ein Verfahren zur Steuerung des erfindungsgemäßen Fahrzeugsitzes angegeben. Bei diesem Verfahren zur Querverschiebung eines Sitzpolsters eines erfindungsgemäßen Fahrzeugsitzes wird die Querverschiebung des Sitzpolsters vor dem Kollisionszeitpunkt eingeleitet, insbesondere beginnt die tatsächliche Querverschiebung bereits vor dem Kollisionszeitpunkt und ist zum Kollisionszeitpunkt, also zu dem Zeitpunkt zu dem das Kollisionsobjekt das Fahrzeug gerade berührt noch nicht beendet. Gleichwohl ist es vorteilhaft, wenn die Beschleunigung des Fahrzeugsitzpolsters in Richtung Fahrzeugmitte zum Zeitpunkt der Kollision bereits abgeschlossen ist. Durch die Querbeschleunigung des Insassen vor dem Kollisionszeitpunkt wird er nicht nur aus der Gefahrenzone verschoben, sondern erfährt eine Beschleunigung, welche dieselbe Richtung aufweist, wie die Beschleunigung, welche das Fahrzeug durch die Kollision erfährt. Befindet sich der Insasse während der Zeitdauer des wesentlichen Impulsübertrags vom Kollisionsobjekt auf das Fahrzeug in einer nichtstarren Verbindung mit dem Fahrzeug, also beispielsweise in einer Querbewegung, welche durch ein Sitzpolster geführt sein kann, so wird ein Teil der Beschleunigung, welche das Fahrzeug durch die Kollision erfährt, nicht mehr auf den bereits vorbeschleunigten Insassen übertragen. Hierdurch werden die für einen Insassen gefährlichen Beschleunigungsspitzen reduziert. Dieses Verfahren ist besonders vorteilhaft, falls die Stärke der Beschleunigung des Insassen und die Zeitpunkte für den Beschleunigungsbeginn und das Ende der Beschleunigung, sowie der Verschiebeweg mittels unfallrelevanter Parameter wie beispielsweise Unfallschwere, Kollisionsgeschwindigkeit, Insassengewicht und Insassengröße angepasst werden. Eine Anpassung der Querverlagerung eines Insassen an eine Unfallsituation kann mittels der Verschiebung eines oder mehrerer Sitzpolster wesentlich einfacher und effektiver erfolgen als dies mittels einer Verschiebung des gesamten Fahrzeugsitzes möglich ist.

Als ein vorteilhafter Zeitpunkt für die Auslösung der Querverschiebung eines Sitzpolsters ergibt sich der Zeitpunkt, welcher um die Auslösezeit t₀ vor dem Kollisionszeitpunkt liegt. Hierbei wird die Auslösezeit t₀ angesetzt als t₀ = t₁ + ((-vₖ (vₖ² + 2 aₖₘ sₖₗ)^{0,5} ) aₖₘ⁻¹) + t₃. Die in dieser Gleichung zur Ermittlung der Auslösezeit t₀ auftretenden Variablen sind: t₁ gleich der Summe der Totzeiten des Gesamtsystems zur Sitzquerverschiebung, t₃ die Verschiebezeit, d. h. die Zeit während der sich das Sitzpolster zur Fahrzeugmitte hin bewegt, vₖ die Geschwindigkeit mit welcher sich das Kollisionsobjekts zum Kollisionszeitpunkt in Richtung Fahrzeugsitz bewegt, aₖₘ eine mittlere Verzögerung des Kollisionsobjekts während des Kollisionsverlaufs und sₖᵢ die Strecke, welche das Kollisionsobjekt bis zum Zeitpunkt des maximalen Impulsübertrags auf den Insassen während des Kollisionsverlaufs von der Fahrzeugaußenhaut ins Fahrzeuginnere zurücklegt. Die Auslösezeit t₀ kann noch um eine Konstante erweitert werden, welche beispielsweise fahrzeugspezifisch ist. Abhängig von der Qualität, der Aktualität und der Menge der zur Verfügung stehenden Parameter kann der Auslösezeitpunkt t₀ an einen Unfall angepasst werden, indem obige Rechenvorschrift nichtlinear erweitert oder durch weitere Parameter ergänzt wird, wie beispielsweise die Masse des Kollisionsobjekts oder die Struktursteifigkeit des Fahrzeugs an der Aufprallstelle. Es hat sich herausgestellt, dass die optimalen Beschleunigungswerte für ein Sitzpolster oberhalb von 5g liegen um einen Insassen schnell genug aus der Gefahrenzone zu bewegen, und andererseits Beschleunigungswerte über 10g keinen Gewinn in der Geschwindigkeit der Insassenquerverschiebung bewirken, welcher die hierfür erforderlichen Maßnahmen rechtfertigt. Als Verschiebeweg, das heißt als maximal mögliche Wegstrecke, um welche ein Sitzpolster in Richtung Fahrzeugmitte bewegt wird ist eine Strecke zwischen 80mm und 120mm vorteilhaft. Verschiebewege deutlich unterhalb 80mm bewegen einen Insassen nicht weit genug aus der Gefahrenzone und Verschiebewege oberhalb 120mm belasten einen Insassen durch die Querverschiebung zu stark. Zudem sind sehr große Verschiebewege häufig schon aus Platzgründen nicht möglich. Die Verschiebezeit, also die Zeitdauer, in welcher sich das Sitzpolster seitwärts bewegt, liegt vorzugsweise zwischen ms 100 und 150 ms.

## Patentansprüche

1. Fahrzeugsitz, welcher bei einem oder unmittelbar vor einem Seitenaufprall eine Relativbewegung des darauf sitzenden Insassen von der aufprallzugewandten Fahrzeugseite weg, zur Fahrzeugmitte hin bewirkt,
**dadurch gekennzeichnet,**
**dass** mindestens ein Sitzpolster gesondert gegenüber anderen Sitzkomponenten und der Sitzbefestigung quer zur Fahrzeuglängsachse verschiebbar ist.

2. Fahrzeugsitz nach Anspruch 1,
**dadurch gekennzeichnet,**
**dass** das gesondert verschiebbare Sitzpolster durch die Sitzfläche gebildet wird.

3. Fahrzeugsitz nach Anspruch 1,
**dadurch gekennzeichnet,**
**dass** das gesondert verschiebbare Sitzpolster durch die Sitzlehne gebildet wird.

4. Fahrzeugsitz nach einem der Ansprüche 1 bis 3,
**dadurch gekennzeichnet,**
**dass** eine Arretiervorrichtung vorgesehen ist, welche nach einer erfolgten Querverschiebung das querverschobene Sitzpolster in dessen Endposition festlegt.

5. Verfahren zur Steuerung eines Fahrzeugsitzes nach einem der Ansprüche 1 bis 4,
**dadurch gekennzeichnet,**
**dass** die Querverschiebung des mindestens einen Sitzpolsters eines Fahrzeugsitzes bei einem oder umittelbar vor einem Seitenaufprall vor dem Kollisionszeitpunkt beginnt.

6. Verfahren nach Anspruch 5,
**dadurch gekennzeichnet,**
**dass** die Querverschiebung des Sitzpolsters zum Kollisionszeitpunkt noch andauert.

7. Verfahren nach Anspruch 6,
**dadurch gekennzeichnet,**
**dass** die Beschleunigung des Sitzpolsters zur Fahrzeugmitte hin zum Kollisionszeitpunkt bereits abgeschlossen ist.

8. Verfahren nach Anspruch 5,
**dadurch gekennzeichnet,**
**dass** die Querverschiebung des Sitzpolsters um die Auslösezeit t₀ vor dem Kollisionszeitpunkt ausgelöst wird, wobei
- die Auslösezeit t₀ = t₁ + ((-vₖ (vₖ² + 2 aₖₘ sₖ₁)^{0,5} ) aₖₘ⁻¹) + t₃ ist, und
- t₁ die Summe der Totzeiten der Querverschiebung des Sitzpolsters ist, und
- t₃ die Verschiebezeit ist, welche das Verschieben eines Sitzpolsters dauert, und
- vₖ die Geschwindigkeit des Kollisionsobjekts zum Kollisionszeitpunkt ist, und
- aₖₘ eine mittlere Verzögerung des Kollisionsobjekts während des Kollisionsverlaufs ist,
- und sₖᵢ die Strecke ist, welche das Kollisionsobjekt während des Kollisionsverlaufs von der Fahrzeugaußenhaut ins Fahrzeuginnere, bis zum Zeitpunkt des maximalen Impulsübertrags auf den Insassen zurücklegt.

9. Verfahren nach Anspruch 8,
**dadurch gekennzeichnet,**
**dass** die Verschiebezeit t₃ zwischen 100 ms und 150 ms beträgt.

10. Verfahren nach einem der Ansprüche 5 bis 9,
**dadurch gekennzeichnet,**
**dass** der Verschiebeweg der Querverschiebung des mindestens einen Sitzpolsters zwischen 80 mm und 120 mm beträgt.

## Claims

1. Vehicle seat, which causes a relative movement of the passenger seated on it away from the vehicle side facing a collision towards the vehicle centre in the event of or immediately before a side impact,
**characterised in that**
at least one seat cushion can be displaced transversely to the vehicle longitudinal axis separately from other seat components and the seat anchoring.

2. Vehicle seat as claimed in claim 1,
**characterised in that**
the separately displaceable seat cushion is the seat surface.

3. Vehicle seat as claimed in claim 1,
**characterised in that**
the separately displaceable seat cushion is the seat back rest.

4. Vehicle seat as claimed in one of claims 1 to 3,
**characterised in that**
a locking mechanism is provided, which fixes the transversely displaced seat cushion in its end position after a transverse displacement has been effected.

5. Method of controlling a vehicle seat as claimed in one of claims 1 to 4,
**characterised in that**
the transverse displacement of the at least one seat cushion of a vehicle seat starts on or immediately before a side impact prior to the instant of collision.

6. Method as claimed in claim 5,
**characterised in that**
the transverse displacement of the seat cushion has not yet finished at the instant of the collision.

7. Method as claimed in claim 6,
**characterised in that**
the acceleration of the seat cushion towards the vehicle centre has already terminated at the instant of the collision.

8. Method as claimed in claim 5,
**characterised in that**
the transverse displacement of the seat cushion is triggered prior to the instant of the collision by the trigger time to, in which case
- the trigger time is t₀ = t₁ + ((-vₖ (vₖ² + 2 aₖₘ sₖ₁)^{0.5}) aₖₘ⁻¹) + t₃ and
- t₁ is the sum of the dead times of the transverse displacement of the seat cushion, and
- t₃ is the displacement time during which a seat cushion is displaced, and
- vₖ is the speed of the collision object at the instant of the collision, and
- aₖₘ is a mean delay of the collision object during the course of the collision
- and sₖᵢ is the distance which the collision object travels from the vehicle outer skin into the vehicle interior, up to the instant when the maximum momentum is transmitted to the passenger.

9. Method as claimed in claim 8,
**characterised in that**
the displacement time t₃ is between 100 ms and 150 ms.

10. Method as claimed in one of claims 5 to 9,
**characterised in that**
the displacement distance of the transverse displacement of at least one seat cushion is between 80 mm and 120 mm.

## Revendications

1. Siège de véhicule, par lequel, en cas de choc latéral ou directement avant un choc latéral, l'occupant du siège effectue un mouvement relatif pour s'écarter du côté du véhicule orienté vers le choc et se déplacer vers le milieu du véhicule,
**caractérisé en ce qu'**au moins une partie rembourrée du siège est apte à se déplacer, séparément des autres composants du siège et de la fixation du siège, dans le sens transversal par rapport à l'axe longitudinal du véhicule.

2. Siège de véhicule selon la revendication 1, **caractérisé en ce que** la partie rembourrée du siège apte à se déplacer séparément est formée par l'assise du siège.

3. Siège de véhicule selon la revendication 1, **caractérisé en ce que** la partie rembourrée du siège apte à se déplacer séparément est formée par le dossier du siège.

4. Siège de véhicule selon l'une quelconque des revendications 1 à 3,
**caractérisé en ce qu'**il est prévu un dispositif d'immobilisation, par lequel la partie rembourrée du siège mobile transversalement est fixée dans sa position finale à la fin du déplacement transversal.

5. Procédé destiné à commander un siège de véhicule selon l'une quelconque des revendications 1 à 4,
**caractérisé en ce que**, en cas de choc latéral ou directement avant un choc latéral, le déplacement transversal de ladite au moins une partie rembourrée du siège de véhicule commence avant le moment de la collision.

6. Procédé selon la revendication 5,
**caractérisé en ce que** le déplacement transversal de la partie rembourrée du siège se poursuit encore au moment de la collision.

7. Procédé selon la revendication 6,
**caractérisé en ce que** l'accélération du mouvement de la partie rembourrée du siège vers le milieu du véhicule est déjà terminée au moment de la collision.

8. Procédé selon la revendication 5,
**caractérisé en ce que** le mouvement transversal de la partie rembourrée du siège est déclenché à l'instant de déclenchement t₀ avant le moment de la collision, sachant que
- l'instant de déclenchement t₀ est égal à t₀ = t₁ + ((-vₖ (vₖ² + 2 aₖₘ sₖᵢ)^{0,5})aₖₘ⁻¹) + t₃, et
- t₁ étant la somme des temps morts du déplacement transversal de la partie rembourrée du siège, et
- t₃ étant le temps de déplacement pendant lequel dure le déplacement d'une partie rembourrée du siège, et
- vₖ étant la vitesse de l'objet de collision au moment de la collision, et
- aₖₘ étant une décélération moyenne de l'objet de collision pendant la durée de la collision,
- et sₖᵢ étant le trajet parcouru par l'objet de collision pendant la durée de la collision depuis la carrosserie extérieure du véhicule vers l'intérieur du véhicule jusqu'à l'instant de la transmission d'impulsion maximale sur l'occupant du siège.

9. Procédé selon la revendication 8, **caractérisé en ce que** le temps de déplacement t₃ est compris entre 100 ms et 150 ms.

10. Procédé selon l'une quelconque des revendications 5 à 9, **caractérisé en ce que** le trajet parcouru par ladite au moins une partie rembourrée du siège pendant le déplacement transversal est compris entre 80 mm et 120 mm.
